# EUROPEAN PATENT APPLICATION

(11) **EP 4 582 896 A2**
(43) Date of publication of application: **09.07.2025**
(21) Application number: 25177654.8
(22) Date of filing: 10.07.2020
(51) Int. Cl.: G05D 7/01

(54) **DEVICE FOR LIMITING OR KEEPING CONSTANT A FLOWING QUANTITY OF LIQUID**

(30) Priority: 12.07.2019 NL 2023494
(62) Divisional of application: 20740436.9
(71) Applicant: Cenergist Limited, Washington Tyne and Wear NE37 2SH (GB)
(72) Inventor: van der Upwich, Stijn, 1273 NA Huizen (NL)
(74) Representative: Arnold & Siedsma

(57) **Abstract**

Flow-limiting element (100, 200) for limiting the flow of a fluid therethrough, comprising
a housing (1) provided with an inlet (2), an outlet (3); and
a resilient plate-like valve element (4) which is arranged in the housing and which is movable to and from a valve seat (9), defining a throughflow opening (11) therebetween, under the influence of a pressure of the fluid flowing therethrough and is arranged to adjust the size of the throughflow opening (11);
wherein the valve seat (9) is arranged with a plurality of protruding members (113, 114, 213, 214), having a footprint and a height (H113, H114, H213, H214), for limiting the movement of the resilient plate-like valve element (4) towards the valve seat (9), and wherein each of the plurality of protruding members (113, 114, 213, 214) comprises an engagement surface (1131, 1141, 2131, 2141) for engaging the resilient plate-like valve element (4), **wherein** the engagement surfaces of at least two of the plurality of protruding members are arranged at different distances (H113, H114, H213, H214) with respect to the valve seat (9).

## Description

The present invention relates to a device for limiting and/or keeping constant a quantity of liquid flowing therethrough.

Water is a scarce resource in many regions of the world and thus needs to be efficiently used and its supply carefully regulated and controlled. For instance, in the Western world a great deal of clean drinking water is wasted by individuals in taking a bath or shower. Despite the fact that many measures have been taken in Western countries, the amount of energy involved in a shower or bath has continued to increase relatively.

Pressure-independent flow limiters are marketed very successfully by applicant, particularly in the United Kingdom and other countries. Such flow limiters are for instance described in EP 1.131.687 A and the Netherlands patent application no. 1010592. Another example of flow-limiting device known in the art is provided by the International Patent Application WO 2015/069114 A2.

Compared to flow limiters of other manufacturers, which usually make use of rubber rings and the like, a considerable improvement is obtained with these known flow limiters, this being due to the ability of these known flow limiters of applicant to provide over a period of years an accurate flow rate of for instance 7.8 (+/- 0.1) liters per minute within a (dynamic) pressure interval of 2.5-10 bar. Existing flow limiters of other manufacturers appear in practice to generate a much less constant and accurate flow rate, particularly in the case of pressure loss (pressure drop), this being particularly undesirable in the case of showers and the like and with the aim of comfortable use of water.

There is also a need in hotels, cruise ships and in (for instance the petrochemical and/or agricultural) industry for flow limiters in order to limit and/or keep constant the force of a flow of liquid. Owing to the flow limiters of applicant water utility companies can determine more precisely the capacity of the required installations when such flow limiters are arranged in hotels, office buildings, private residences and the like at many locations in the area which they supply. Savings in the costs of installations are hereby considerable.

A goal of the present invention is to further improve flow limiters, in particular to increase the (dynamic) pressure interval wherein a reliable constant flow rate can be obtained and/or to improve the reliability and/or the durability of the flow limiters.

The goal, amongst other goals, is achieved by a flow-limiting element for limiting the flow of a fluid therethrough, comprising
a housing provided with an inlet, an outlet; and
a resilient plate-like valve element which is arranged in the housing and which is movable to and from a valve seat, defining a throughflow opening therebetween, under the influence of a pressure of the fluid flowing therethrough and is arranged to adjust the size of the throughflow opening;
wherein the valve seat is arranged with a protruding member, having a footprint and a height, for limiting the movement of the resilient plate-like valve element towards the valve seat, wherein the protruding member comprises an engagement surface for engaging the resilient plate-like valve element, wherein the engagement surface is at least partially curved, wherein a radius of curvature of the at least partially curved engagement surface is equal to, or larger than, a smallest dimension of the footprint of the protruding member.

A footprint is commonly defined as the area on a surface covered by something. The footprint of the protruding member thus defined as the area on the valve seat that is covered by the protruding member, i.e. as the area of intersection between the valve seat and the protruding member.

In a preferred embodiment, the protruding member has a substantially rectangular footprint having a respective width and length, wherein the radius of curvature of the at least partially curved engagement surface is equal to, or larger than, at least one of the respective width and length, in particular the smallest of the said width and length.

In a preferred embodiment, the footprint of the protruding member is defined by a circle with a certain width that is equal to the diameter of the footprint, wherein the radius of curvature of the at least partially curved engagement surface is equal to, or larger than the width.

The flow limiting element, or simply flow limiter, works by restricting the throughflow opening between the resilient plate-like valve element and the valve seat when the pressure increases. Such an increased pressure will act on the upstream side of the resilient plate-like valve element whereby it will bend, such that the resilient plate-like valve element moves towards the valve seat, whereby the throughflow opening is reduced and the flow is limited, or at least kept substantially constant with increasing pressure.

The protruding member, often also referred to as a cam, is arranged to engage with the resilient plate-like valve element if the pressure that is applied to the upstream side of the resilient plate-like valve element is higher than a certain predefined threshold. As from that point onwards pressure starts to be applied directly to the protruding member through its engaging surface, the at least partially curved engagement surface, wherein the radius of curvature of the at least partially curved engagement surface is equal to, or larger than, a smallest dimension of the footprint, such as a width, length or diameter, of the protruding member, enables a smoother distribution of the induced stresses in the protruding member, thereby avoiding potential stress peaks that could, potentially lead to local (permanent) plastic deformations, or in other ways negatively influence the lifetime of the flow-limiter. For instance, if the flow limiter is produced from plastic and/or similar synthetic materials, creep could result from longer periods of increased stresses in the material, thereby negatively affecting the life time of the flow limiters and/or the through flow characteristics of the flow limiter.

Preferably, the flow-limiting element comprises a plurality of protruding members. It is then preferred if each of the engagement surfaces is curved as described above.

It is noted that the valve seat can be arranged with multiple differently shaped protruding members having a respective footprint. It is further noted that the footprint of the protruding members may feature any shape defining a surface area, such as polygons with any number of sides, such as a triangle, quadrilateral, pentagon, hexagon, and so on; any shape (at least partially) composed of circular arcs, such as a circle, semicircle, circular sector, ellipse, and so on, or any combination of these shapes.

Preferably, the at least partially curved engagement surface is arranged to at least slightly flatten under influence of an applied pressure. As the pressure on the upstream side of the resilient plate-like valve element increases, so will the pressure on the engagement surface of the protruding member. By arranging the at least partially curved engagement surface such that it is arranged to at least slightly flatten, the area of the engagement surface engaging with the plate-like valve element will increase, hence lowering the stresses in the material. Hereby, potential stress peaks and/or long periods of too high stresses can be further reduced, thereby further improving the lifetime and reliability of the flow limiters.

In a preferred embodiment, the engagement surface comprises beveled and/or rounded edges. This leads to a smooth stress distribution in the protrusions, such that, for instance, the integrity of the protruding member can even be maintained when operating with high pressure and/or high temperature fluid flows of for instance 90 °C and 10 bars pressure. Preferably, the complete or full surface of the protruding member is a curved surface.

In a preferred embodiment of the flow limiting element, the engagement surface of the protruding member is a double curved engagement surface. More preferably, the engagement surface is spherical or at least partially spherically shaped. A double curved, or preferably a spherical engagement surface leads, under increased applied pressures and/or with higher temperatures, to an even better redistribution of material stresses and/or ensures better matching contact surfaces between the protruding members and the valve element. Hereby, sudden changes in contact surface and/or sudden stress increased are prevented and creep in the material of the protruding members is significantly reduced and/or even prevented.

It is preferred if the radius of curvature of the at least partially curved engagement surface is at least 1.2 times, preferably at least 1.5 times, more preferably at least 2 times the smallest dimension of the footprint of the protruding member. Due to the increased smoothness of the contact during engagement of the protruding member and the valve-like element, further improved stress reduction characteristics are obtained.

In a preferred embodiment, the radius of curvature of the at least partially curved engagement surface is at least 5 times, preferably at least 10 times, more preferably at least 15 times the height of the protruding member. Also in the arrangement, the increase smoothness of the contact during engagement of the protruding member and the valve-like element further improves the stress reduction characteristics are obtained.

In a preferred embodiment of the flow-limiting element, the valve element is retained on one side and the valve element can move resiliently on the opposite side in the direction of the valve seat. A first end is retained or coupled to, i.e. kept in contact with, the housing, while the free end, opposite the retained side, seen in the plane of the valve element, is movable within the housing. Preferably, the flow-limiting element comprises a plurality of protruding members, wherein at least two of the protruding members are preferably arranged at different heights, seen in a plane parallel to the plane of the valve element, with respect to the retained side of the valve element. With further increases of the fluid pressure applied on the upstream side of the resilient plate-like valve element, the resilient plate-like valve element will bend further towards the valve seat and contact a next protruding member. The at least two protruding members are thus preferably arranged to subsequently contact the valve member upon increasing pressure. Hereby the pressure is redistributed over at least a second protruding member, whereby too high material stresses in the protruding members can be prevented, or at least reduced.

It is further preferred that the plurality of protruding members comprises a first set of two protruding members, wherein the two protruding members of the first set are arranged on opposing sides with respect to the throughflow opening in the housing. The two protruding members are then arranged to engage the valve element preferably at or near two opposite edges of the valve element. In such a configuration, wherein the protruding members are preferably arranged on opposite sides the valve seat, the pair of protruding members is preferably arranged substantially asymmetrically, i.e. the heights of the protruding members that extend from the valve seat differ to some extent. In other words, the engagement surfaces of the protruding members within a set are preferably arranged at different distances, seen in a plane perpendicular to the plane of the valve element, with respect to the valve seat. This creates, when the valve element is in contact with the protruding members, a bias in the resilient plate-like valve element, whereby vibrations of the plate-like valve element are reduced.

Preferably, the flow-limiting element comprises also a second set of protruding members, wherein the two protruding members of the second set are arranged at distances further from the retained side of the valve element when compared to the protruding members of the first set. Hereby, a flow limiter is obtained resulting in effective stress reductions and a prevention of vibrations, thereby further improving the lifetime and reliability of the flow limiters. It is further noted that the second set of protruding members can be similar, or even substantially equal, in shape with respect to the first set. The second set of protruding members can also be shaped differently than the first set of protruding members.

In all embodiments described thus far, the protruding members are arranged on the valve seat. Nonetheless, the same can apply to the case where the protruding members are arranged on the resilient plate-like valve element, in particular on the downstream side or lower surface at a location that is arranged to engage the valve seat. Hence, protruding members can be arranged on one of the resilient plate-like valve elements and the valve-seat. In this embodiment, the curved engagement surface is preferably arranged to contact the valve seat.

The present invention is further illustrated by the following Figures, which show preferred embodiments of the flow limiting element, and are not intended to limit the scope of the invention in any way, wherein:
- Figure 1 shows a cross-sectional view of a flow limiting element according to a first embodiment.
- Figure 2 shows an upper view of the flow limiting element according to the first embodiment.
- Figure 3 shows in a cross-sectional view the details of a protruding member of the flow limiting element according to the first embodiment.
- Figure 4 shows a cross-sectional view of a flow limiting element according to a second embodiment.

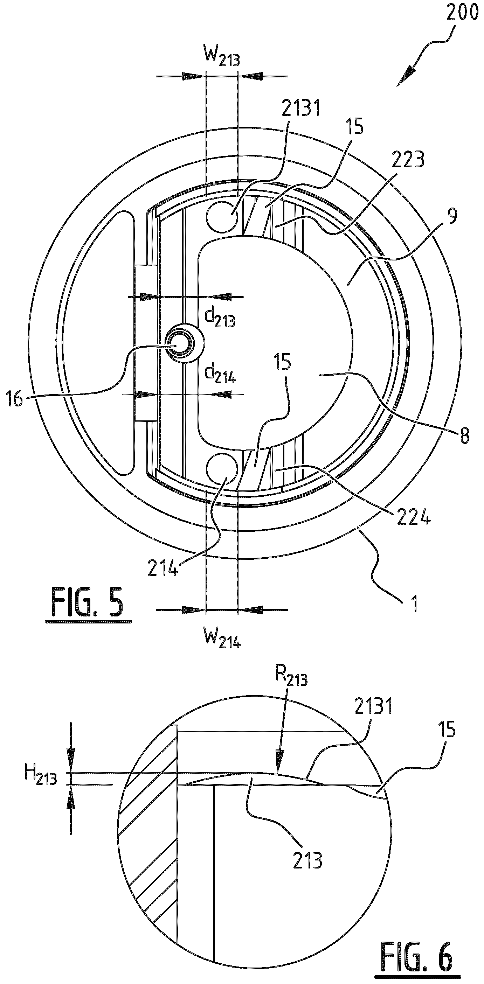

- Figure 5 shows an upper view of the flow limiting element according to the second embodiment.
- Figure 6 shows in a cross-sectional view the details of a protruding member of the flow limiting element according to the second embodiment.

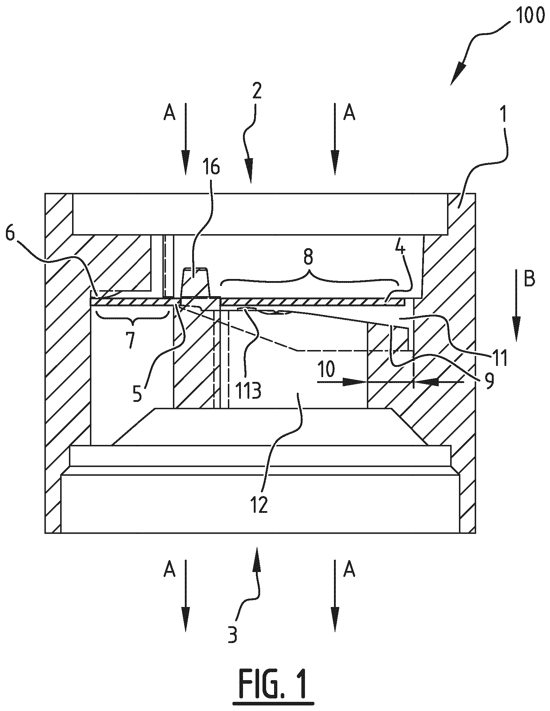

Figure 1 shows a cross-sectional view of a flow limiting element 100 according to a first embodiment. Flow limiter 100 comprises a housing 1, which has as an inlet 2 a fluid opening on the upstream side and as an outlet 3 a fluid opening on the downstream side. The direction of flow is indicated by the different arrows A and is in the direction of the inlet 2 to the outlet 3. Within the housing 1 a resilient plate-like valve element 4 is arranged, comprising a retained section 7 and a resiliently movable section 8. The plate-like resilient valve element 4 is supported on a support part 5 in the central downstream part of housing 1, wherein said support part 5 and a cushion part 6 in the peripheral upstream part of housing 1 hold in place the retained section 7 of resilient plate-like valve element 4. This fixation is brought about as follows. The resilient valve element 4 in principle lies unattached in housing 1 and is supported on one side over the whole width by support part 5 and held in place by a pin 16 on support part 5 which fits loosely in a hole arranged in resilient element 4. Both sides, i.e. the smaller retained section 7 and the larger resilient section 8 of the resilient element are exposed to the water pressure and a force is therefore exerted on both sides. The outer end of retained section 7 on the opposite side of resilient valve element 4 rests against cushion 6, whereby the resilient valve element 4 is fixed in its position by the flow of the liquid. The size of the throughflow opening 11 can be adjusted in the rest state of valve element 4 by adjusting the thickness of cushion 6. The resilient section 8 of plate-like valve element 4 determines, together with a valve seat 9 with thickness 10 inclining downward to the outer end of resilient part 8, the width and length of the throughflow opening 11, wherein said opening 11, together with the space 12 lying on the liquid outlet side of resilient element 4, realizes a pressure drop such that the liquid flow rate at the outlet 3 is constant. In housing 1 protruding member 113 is also arranged on valve seat 9 such that under the influence of the inlet pressure they limit the stroke of resilient element 4.

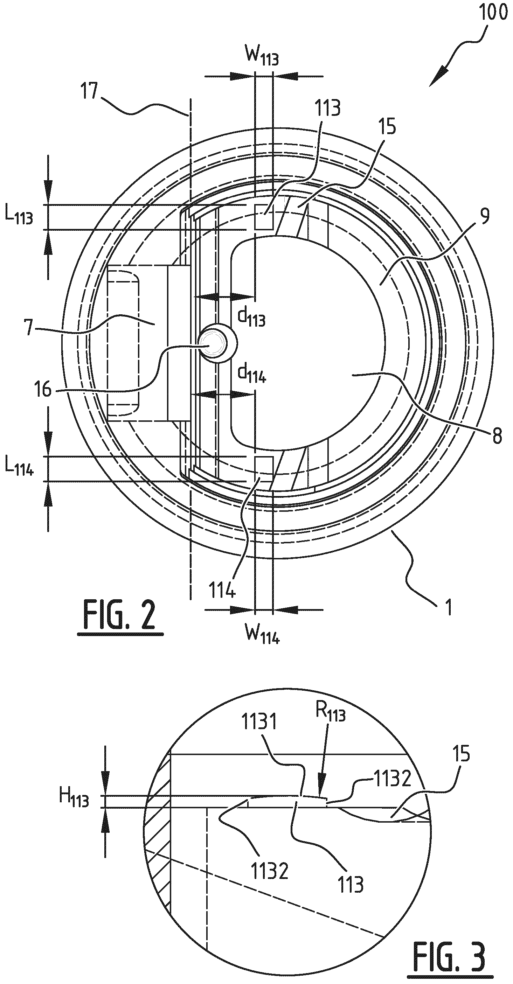

Figure 2 shows an upper view of the flow limiting element 100 according to the first embodiment. A pair of protruding members 113, 114, forming a first set, is arranged on valve seat 9 at respective distances d113, d114 as seen from the retained section of the valve element such that, under the influence of the inlet pressure, they jointly limit the stroke of resilient element 4 in the downward direction B (see again figure 1). The distances d113, d114 can be substantially equal, but can also be allowed to slightly differ from one and another. Each pair of protruding members 113, 114 can be arranged asymmetrically, i.e. the heights H113, H114 of the two members 113, 114 from the valve seat 9 differ to some extent. This creates bias in the resilient valve element 4, whereby vibrations of valve element 4 are reduced or even prevented. Also arranged in valve seat 9 are recesses 15 which influence the liquid flow in the flow limiting element 100 such that the direction of the outgoing liquid flow is substantially the same as the direction of the ingoing liquid flow.

Protruding members 113, 114 have respective widths W113, W114, lengths L113, W114 and heights H113, H114, thereby protruding member 113 has a substantially rectangular footprint. In addition, as is clearly seen in figure 3, the engagement surface 1131 of protruding member 113 is at least partially curved with a predefined radius of curvature R113. Protruding member 113 thereby takes the form of a sort of speedbump with substantially rectangular sides 1132 arranged at the ends of the curved engagement surface 1131. The engagement surface 1131 has a single curvature, whereby a central axis (not shown) of the curvature is substantially parallel to a virtual line 17 separating the retained section 7 and resiliently movable section 8 of the plate-like resilient valve element 4. The engaging surface 1131 of protruding member 113 is arranged to engage with the resilient plate-like valve element 4 if the pressure that is applied to the upstream side of the resilient plate-like valve element 4 is higher than a certain predefined threshold. As from that point onwards pressure starts to be applied directly to the protruding member 113 through its engaging surface 1131, the at least partially curved engagement surface, wherein the radius of curvature R113 of the at least partially curved engagement surface 1131 is equal to, or larger than, at least one of the respective dimensions, such as widths W113 and lengths L113. Alternatively, the radius of curvature R113 is based on the height H113 of the protruding member, wherein the radius of curvature R113 of the at least partially curved engagement surface is at least 5 times, preferably at least 10 times, more preferably at least 15 times the height of the protruding member.

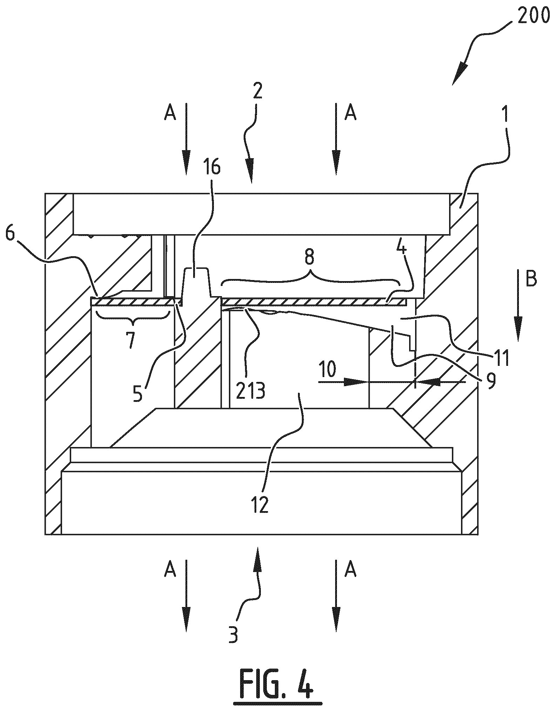

Figure 4 shows a cross-sectional view of a flow limiting element 200 according to a second embodiment. Flow limiting element 200 according to the second embodiment can be almost identical to the flow limiting element 100 according to the first embodiment. The difference is in the shape of the protruding member 213 when compared to protruding member 113. Again, the engagement surface 2131 is a curved surface, however, the curvature is extended over the full width W213 of protruding member 213 such that a smoother transition between the valve seat 9 and the protruding member 213 is obtained. The curved engagement surface 2131 is furthermore formed as a double curved, in this example a spherical engagement surface 2131. Also, the footprint of protruding member 213 is defined by a circle with a certain width W213, which is equal to the diameter of the footprint of protruding member 213. Protruding members 213, 214 can be arranged at respective distances d213, d214 as seen from the retained section of the valve element. These distances d213, d214 can be substantially equal, but can also be allowed to slightly differ from one and another. Also in this embodiment each pair of protruding members 213, 214 can be arranged asymmetrically, i.e. the heights H213, H214 of the two members 213, 214 from the top of the valve seat 9 differ to some extent.

The engaging surface 2131 of protruding member 213 is also arranged to engage with the resilient plate-like valve element 4 if the pressure that is applied to the upstream side of the resilient plate-like valve element 4 is higher than a certain predefined threshold. As from that point onwards pressure starts to be applied directly to the protruding member 213 through its engaging surface 2131, the at least partially curved engagement surface, wherein the radius of curvature R213 of the at least partially curved engagement surface 2131 is equal to, or larger than widths W214. Alternatively, the radius of curvature R213 is based on the height H213 of the protruding member, like is the case for the protruding member 113 of the first embodiment.

The valve seat 9 can, in all embodiments, further be provided with a secondary protruding member 223, or a pair of secondary protruding members 223, 224. The secondary protruding members are arranged such that protruding members 213, 214 and secondary protruding members 223, 224 are arranged on the valve seat 9, on opposite sides of the recess 15. Secondary protruding members 223, 224 are thus arranged at a distance further from the retained section 6 of the resilient plate-like member 4 and will tend to engage with the resiliently movable section 8 at higher pressures, at a point wherein the resiliently movable section 8 has already contacted the protruding members 213, 214. Thereby, the forces and/or stresses resulting from the pressure applied by the flow on the upstream side of the resilient plate-like valve 4, can be redistributed over the secondary protruding members 223, 224 thereby partly relieving the protruding members 213, 214. Longer operational lifetime is thereby achieved. Note that the pair of secondary protruding members 223, 224 can also be arranged asymmetrically, to even further avoid vibrations.

Although the embodiments described in the figures feature protruding members 113, 114, 213, 214 having respective rectangular and circular footprints, it is noted that the footprint of the protruding members may feature any shape defining a surface area, such as polygons with any number of sides, such as a triangle, quadrilateral, pentagon, hexagon, and so on; any shape (at least partially) composed of circular arcs, such as a circle, semicircle, circular sector, ellipse, and so on, or any combination of these shapes.

### Embodiments

1. Flow-limiting element for limiting the flow of a fluid therethrough, comprising
   a housing provided with an inlet, an outlet; and
   a resilient plate-like valve element which is arranged in the housing and which is movable to and from a valve seat, defining a throughflow opening therebetween, under the influence of a pressure of the fluid flowing therethrough and is arranged to adjust the size of the throughflow opening;
   wherein the valve seat is arranged with a protruding member, having a footprint and a height, for limiting the movement of the resilient plate-like valve element towards the valve seat and wherein the protruding member comprises an engagement surface for engaging the resilient plate-like valve element, wherein the engagement surface is at least partially curved, wherein a radius of curvature of the at least partially curved engagement surface is equal to, or larger than, a smallest dimension of the footprint of the protruding member.
2. Flow-limiting element according to embodiment 1, wherein the protruding member has a substantially rectangular footprint having a respective width and length, wherein the radius of curvature of the at least partially curved engagement surface is equal to, or larger than, at least one of the respective width and length.
3. Flow-limiting element according to embodiment 1, the footprint of the protruding member is defined by a circle with a certain width that is equal to the diameter of the footprint, wherein the radius of curvature of the at least partially curved engagement surface is equal to, or larger than the width.
4. Flow-limiting element according to any of the preceding embodiments, wherein the at least partially curved engagement surface is arranged to elastically flatten under influence of an applied pressure.
5. Flow-limiting element according to any of the preceding embodiments, wherein the engagement surface comprises beveled and/or rounded edges and/or wherein a full engagement surface is a curved surface.
6. Flow-limiting element according to any of the preceding embodiments, wherein the engagement surface of the protruding member is a double curved and/or spherical engagement surface.
7. Flow-limiting element according to any of the preceding embodiments, wherein the radius of curvature of the at least partially curved engagement surface is at least 1.2 times, preferably at least 1.5 times, more preferably at least 2 times the smallest dimension of the footprint, such as a length, width and/or diameter, of the protruding member.
8. Flow-limiting element according to any of the preceding embodiments, wherein the radius of curvature of the at least partially curved engagement surface is at least 5 times, preferably at least 10 times, more preferably at least 15 times the height of the protruding member.
9. Flow-limiting element according to any of the preceding embodiments, wherein the valve element is retained on one side and the valve element can move resiliently on the opposite side in the direction of the valve seat; wherein the flow-limiting element comprises a plurality of protruding members, wherein the protruding members are arranged at different heights with respect to the valve seat.
10. Flow-limiting element according to embodiment 9, wherein the plurality of protruding members comprises a first set of two protruding members, wherein the two protruding members of the first set are arranged on opposing sides with respect to the throughflow opening in the housing.
11. Flow-limiting element according to embodiment 10, comprising a second set of protruding members, wherein the two protruding members of the second set are arranged on one of the resilient plate-like valve element and the housing at distances further from the retained side of the valve element when compared to the protruding members of the first set.

## Claims

1. Flow-limiting element (100, 200) for limiting the flow of a fluid therethrough, comprising
a housing (1) provided with an inlet (2), an outlet (3); and
a resilient plate-like valve element (4) which is arranged in the housing and which is movable to and from a valve seat (9), defining a throughflow opening (11) therebetween, under the influence of a pressure of the fluid flowing therethrough and is arranged to adjust the size of the throughflow opening (11);
wherein the valve seat (9) is arranged with a plurality of protruding members (113, 114, 213, 214), having a footprint and a height (H113, H114, H213, H214), for limiting the movement of the resilient plate-like valve element (4) towards the valve seat (9), and wherein each of the plurality of protruding members (113, 114, 213, 214) comprises an engagement surface (1131, 1141, 2131, 2141) for engaging the resilient plate-like valve element (4), **characterized in that** the engagement surfaces of at least two of the plurality of protruding members are arranged at different distances (H113, H114, H213, H214) with respect to the valve seat (9).

2. Flow limiting element according to claim 1, wherein the engagement surface (1131, 1141, 2131, 2141) is at least partially curved, wherein a radius of curvature of the at least partially curved engagement surface (R113, R114, R213, R214) is equal to, or larger than, the smallest of the length and width dimensions of the footprint of the protruding member, wherein the footprint of the protruding member is the area on the valve seat that is covered by the protruding member.

3. Flow limiting element (100) according to claim 2, wherein the footprint of the protruding member has a shape belonging to polygons with any number of sides or a shape at least partially composed of circular arcs.

4. Flow-limiting element (100) according to claim 2 or 3, wherein the protruding member (113, 114) has a substantially rectangular footprint having a respective width (W113, W114) and length (L113, L114), wherein the radius of curvature of the at least partially curved engagement surface (R113, R114) is equal to, or larger than, at least one of the respective width (W113, W114) and length (L113, L114).

5. Flow-limiting (200) element according to claim 2, 3 or 4, wherein the footprint of the protruding member (213, 214) is defined by a circle with a certain width (W213, W214) that is equal to the diameter of the footprint, wherein the radius of curvature of the at least partially curved engagement surface (R213, R214) is equal to, or larger than the width (W213, W214).

6. Flow-limiting element (100, 200) according to any of the preceding claims 2 - 5, wherein the at least partially curved engagement surface (1131, 1141, 2131, 2141) is arranged to elastically flatten under influence of an applied pressure.

7. Flow-limiting element (100, 200) according to any of the preceding claims 1 - 6, wherein the engagement surface (1131, 1141, 2131, 2141) comprises beveled and/or rounded edges and/or wherein a full engagement surface (1131, 1141, 2131, 2141) is a curved surface.

8. Flow-limiting element (100, 200) according to any of the preceding claims, wherein the engagement surface (1131, 1141, 2131, 2141) of the protruding member is a double curved and/or spherical engagement surface.

9. Flow-limiting element (100, 200) according to any of the preceding claims 2 - 8, wherein the radius of curvature of the at least partially curved engagement surface (R113, R114, R213, R214) is at least 1.2 times, preferably at least 1.5 times, more preferably at least 2 times the smallest dimension of the footprint, such as a length, width and/or diameter, of the protruding member.

10. Flow-limiting element (100, 200) according to any of the preceding claims 2 - 9, wherein the radius of curvature of the at least partially curved engagement surface (R113, R114, R213, R214) is preferably at least 10 times, more preferably at least 15 times the height of the protruding member.

11. Flow-limiting element (100, 200) according to any of the preceding claims, wherein the valve element (4) is retained on one side and the valve element can move resiliently on the opposite side in the direction of the valve seat (9), wherein the protruding members are arranged at different heights (H113, H114, H213, H214) with respect to the valve seat (9).

12. Flow-limiting element (100, 200) according to any of the preceding claims, wherein the plurality of protruding members comprises a first set of two protruding members (113, 114, 213, 214), wherein the two protruding members of the first set are arranged on opposing sides with respect to the throughflow opening (11) in the housing (1).

13. Flow-limiting element (100, 200) according to claim 12, comprising a second set of protruding members (223, 224), wherein the two protruding members of the second set are arranged on one of the resilient plate-like valve element (4) and the housing (1) at distances further from the retained side (7) of the valve element when compared to the protruding members of the first set (113, 114, 213, 214).
